# EUROPÄISCHE PATENTSCHRIFT

(11) **EP 3 558 871 B1**
(45) Veröffentlichungstag und Bekanntmachung des Hinweises auf die Patenterteilung: **15.06.2022**
(21) Anmeldenummer: 17825486.8
(22) Anmeldetag: 18.12.2017
(51) Int. Cl.: C01D 15/02

(54) **VERFAHREN ZUR HERSTELLUNG VON LITHIUMOXID**
METHOD FOR PRODUCING LITHIUM OXIDE
PROCÉDÉ DESTINÉ À LA PRÉPARATION D'OXYDE DE LITHIUM

(30) Priorität: 21.12.2016 DE 102016225882
(43) Veröffentlichungstag der Anmeldung: 30.10.2019
(73) Patentinhaber: Albemarle Germany GmbH, 65926 Frankfurt am Main (DE)
(72) Erfinder: DIETZ, Rainer, 63225 Langen (DE); WILLEMS, Johannes, 8050 Zürich (CH); HAUK, Dieter, 61169 Friedberg (DE); WIETELMANN, Ulrich, 61381 Friedrichsdorf (DE)
(74) Vertreter: Uexküll & Stolberg
(86) Internationale Anmeldenummer: PCT/EP2017/083246
(87) Internationale Veröffentlichungsnummer: WO 2018/114760

(56) Entgegenhaltungen:
- JP-A- H11 209 122
- JP-A- H11 209 123
- JP-A- 2012 121 780
- JONG-WAN KIM ET AL: "Thermal and carbothermic decomposition of Na2CO3 and Li2CO3", METALLURGICAL AND MATERIALS TRANSACTIONS B, SPRINGER-VERLAG, NEW YORK, Bd. 32, Nr. 1, Februar 2001 (2001-02), Seiten 17-24, XP019697279, ISSN: 1543-1916 in der Anmeldung erwähnt

## Beschreibung

Die Erfindung betrifft ein wirtschaftliches Verfahren zur Herstellung von pulverförmigem Lithiumoxid.

Lithiumoxid findet aktuell Einsatz als Rohstoff für die Herstellung von Gläsern, Glaskeramiken, Keramiken sowie positiven Elektroden von Lithiumbatterien. Ferner kann es zur Herstellung von Lithiumhydroxid eingesetzt werden.

Lithiumoxid kann durch Verbrennung von Lithiummetall in sauerstoffhaltiger Atmosphäre hergestellt werden. Dieser Prozeß ist unwirtschaftlich, da er von metallischem Lithium ausgeht, das über eine energieaufwändige Schmelzflußelektrolyse hergestellt wird.

Li₂O kann weiterhin durch thermische Zersetzung von Lithiumperoxid, Li₂O₂, bei 300-400°C produziert werden. Auch dieser Prozess ist ökonomisch nachteilig, da es sich um einen zweistufigen Prozeß handelt und er als Ausgangsverbindungen Lithiumhydroxid und das gefahrgeneigte Oxidationsmittel Wasserstoffperoxid benötigt.

Schließlich sind auch Prozesse bekannt, die von der Lithium-Basischemikalie Lithiumcarbonat ausgehen. Durch thermische Zersetzung bei etwa 1000°C, d.h. von geschmolzenem Lithiumcarbonat, in Platintiegeln bei einem Druck von max. 2000 µm Hg entsteht gemäß

Li₂CO₃ → Li₂O + CO₂ (1)

das Oxid in klumpiger Form, welches vor weiterer Verwendung gemahlen werden muß (D.S. Appleton, R.B. Poeppel in: Advances in Ceramics, Vol. 25, "Fabrication and properties of lithium ceramics", ed. I.J. Hastings and G.W. Hollenberg, 1989, 111-116). Bei einem sehr niedrigen Druck von < 10⁻⁵ Torr kann die thermische Zersetzung auch unterhalb des Li₂CO₃-Schmelzpunktes von 720°C erfolgen (T. Takahashi, H. Watanabe, Fusion Eng. Design 8 (1989) 399-405). Solche niedrigen Drücke sind jedoch in technischen Apparaten nicht wirtschaftlich zu erreichen.

Weiterhin ist bekannt, dass Lithiumcarbonat im Temperaturbereich 400-725 °C mittels Wasserstoffgas gemäß

Li₂CO₃ + H₂ → Li₂O + H₂O + CO (2)

zu reduzieren (JP2014047117A). Dieses Verfahren hat sicherheitstechnische Nachteile, bedingt durch den Einsatz von explosionsfähigem Wasserstoffgas bei hohen Temperaturen.

Schließlich kann als Reduktionsmittel für Lithiumcarbonat Ruß verwendet werden (J.-W. Kim, H.-G. Lee, Metallurgical Mat. Trans. B, 32B (2001) 17-24). Die carbothermische Zersetzung benötigt kein Vakuum, sondern erfolgt unter einem Argon-Gasstrom und sie verläuft rasch bei Temperaturen oberhalb etwa 720 °C gemäß folgender Reaktion in Aluminiumoxid-Tiegeln:

Li₂CO₃ + C → Li₂O + 2CO (3)

Nachteilig dabei ist die starke Korrosionswirkung der Carbonatschmelze auf das verwendete Behältermaterial Aluminiumoxid, wie in eigenen Versuchen herausgefunden wurde (siehe Vergleichsbeispiele). Die Tiegelmasse wird durch Bildung von LiAlO₂ abgetragen. Es erfolgt keine Passivierung der Tiegelwandung. Lithiumoxid wird wiederkehrend durch LiAlO₂ verunreinigt. Die Aluminiumoxid-Tiegel können deshalb für die Herstellung von möglichst reinem Lithiumoxid nicht verwendet werden. Die carbothermische Zersetzung unter Verwendung von Koks, Holzkohle, Aktivkohle, Zucker, synthetischem Graphit u.ä. kann auch bei Temperaturen oberhalb 500 °C, aber unterhalb von 720 °C, d.h. unter Vermeidung des Schmelzens von Lithiumcarbonat erfolgen (JP2012121780A). In diesem Falle sind relativ lange Reaktionszeiten zu gewärtigen. In ähnlicher Weise kann Lithiumcarbonat, eingebettet in ein Polymerharz im Temperaturbereich zwischen 600 und 700 °C zu granulärem Lithiumoxid reduziert werden (JP11209122A). Nachteilig sind die langen Reaktionszeiten von mindestens 6 Stunden und die Tatsache, dass das Oxid in granulierter Form anfällt. Für die weitere Verwendung z.B. zur Herstellung von Elektrodenmaterialien für Lithiumbatterien muß das Produkt dann vorher aufgemahlen werden.

Die Erfindung hat sich die Aufgabe gestellt, ein einfaches und einstufiges Verfahren unter Verwendung des Basisrohstoffes Lithiumcarbonat anzugeben, mit dessen Hilfe ein pulverförmiges Lithiumoxid in hoher Reinheit unter möglichst ökonomischen, einfachen Reaktionsbedingungen hergestellt werden kann.

Erfindungsgemäß wird die Aufgabe durch ein Verfahren gelöst, bei dem Lithiumkarbonat mit elementarem Kohlenstoff oder einer unter den Reaktionsbedingungen elementaren Kohlenstoff bildenden Kohlenstoffquelle im Temperaturbereich von 720 bis 1200°C umgesetzt wird, wobei die Umsetzung unter weitgehendem Ausschluß von Sauerstoff stattfindet und wobei die Umsetzung in Behältnissen vorgenommen wird, deren produktberührende Oberflächen gegenüber den Reaktanden und Produkten korrosionsstabil sind. Die Umsetzung erfolgt entweder unter reduziertem Druck, beispielsweise "technischem Vakuum" (d.h. im Druckbereich 0,1 bis 50 mbar) oder unter gegenüber Kohlenstoff inerter oder weitgehend inerter Gasatmosphäre bei Drücken von etwa 0,5 bis 2 bar. Als inerte Gasatmosphäre können bevorzugt Stickstoff oder Edelgase (bevorzugt Argon) oder Mischungen der inerten Gase verwendet werden.

Zur Erlangung einer auch unter kommerziellen Gesichtspunkten zufriedenstellenden Reaktionsgeschwindigkeit erfolgt die Umsetzung über der Schmelztemperatur von Lithiumcarbonat, das heißt oberhalb von etwa 720-730°C. Bevorzugt liegt die Reaktionstemperatur im Bereich zwischen 800 und 950 °C. Unter diesen Bedingungen werden in der Regel Reaktionszeiten von weniger als 5 h, bevorzugt weniger als 3 h beobachtet. Bei 900°C beträgt die Reaktionszeit nach thermogravimetrischen Analysen etwa 30 Minuten. Der elementare Kohlenstoff wird in pulverförmiger Form eingesetzt. Bevorzugt werden handelsüblicher Ruß oder Aktivkohlen, beispielsweise Furnaceruße (Ruße für Autoreifen) wie Carbon Black N220 und N110, Gasruße wie Timcal C45, Conductive Carbon Black oder Thermalruße wie N990 Thermal Carbon Black verwendet. Diese Kohlenstoffe können bis zu 1 Gew.% Schwefel und bis zu 2 Gew.% Silicium enthalten. Besonders geeignet sind auch handelsübliche, kostengünstige, aus Erdöl hergestellte Ruße für Autoreifen mit folgendem Verunreinigungsprofil: 2300 ppm Na, 1900 ppm S, 200 ppm Ca, 100 ppm Fe, etwa 1 Gew.% Si. Es wurde überraschend festgestellt, dass die genannten Verunreinigungen bei der erfindungsgemäßen Bereitung von wäßrigen Lithiumhydroxidlösungen durch ein einfaches fest/flüssig-Trennverfahren, das heißt beispielsweise Filtration oder Zentrifugation, weitgehend abgetrennt werden können.

Anstelle elementaren Kohlenstoffs kann auch ein organisches, Kohlenstoff enthaltendes, Material als Reduktionsmittel verwendet werden. Organische Materialien verkoken unter den oben aufgeführten nicht-oxidierenden (Sauerstoffausschluß) Hochtemperaturbedingungen vollständig zu elementarem Kohlenstoff und flüchtigen Nebenprodukten. Der elementare Kohlenstoff, egal ob er als solcher eingesetzt oder erst unter Reaktionsbedingungen durch thermische Zersetzung organischer Materialien (Verkokung) gebildet wird, wird im stöchiometrischen molaren Verhältnis des Lithiumkarbonats zum Kohlenstoff von 1 : 0,5 bis 1 : 1,5 eingesetzt.

Es wurde überraschend gefunden, dass das Reaktionsprodukt Lithiumoxid, obwohl aus geschmolzenem Lithiumcarbonat gebildet, als fließfähiges Pulver erhalten wird. Zur weiteren Verwendung ist es also nicht notwendig, das Reaktionsprodukt durch Brechen oder Vermahlen in eine handhabbare Form zu überführen.

Zur Vermeidung von Verunreinigungen im Produkt sowie unter Kostengesichtspunkten ist es notwendig, dass die Umsetzung in Reaktionsgefäßen vorgenommen wird, deren produktberührte Oberflächen gegenüber den Reaktanden wie auch den Reaktionsprodukten möglichst inert und langzeitkorrosionsbeständig sind. Als solche beständigen Konstruktionswerkstoffe können beispielsweise Glaskohlenstoff, Lithiumaluminat oder mit Kohlenstoff beschichtete Keramiken, beispielsweise C@Quarz, verwendet werden. Ferner weist Tantal eine mäßige Stabilität auf. Es wurde wiederum überraschend beobachtet, dass Glaskohlenstofftiegel gegenüber Lithiumcarbonatschmelze und dem gebildetem Lithiumoxid korrosionsstabil sind. Dies war nicht zuerwarten, da bekannt ist, dass Kohlenstoff bei hohen Temperaturen Lithiumcarbonat unter Lithiumoxidbildung reduziert und dadurch gemäß Gl. 3 verbraucht wird. In eigenen Versuchen wurde gefunden, dass metallische Werkstoffe im allgemeinen nicht verwendungsfähig sind. Beispielsweise zerbröseln Titantiegel bereits nach einmaligem Gebrauch. Dagegen weist Tantal eine begrenzte Stabilität auf.

Die Umsetzung kann im einfachsten Fall unter statischen Bedingungen, d.h. ungerührt und nicht bewegt, durchgeführt werden. Bevorzugt wird sie in einem Bewegtbett- oder Wanderbett-Reaktor durchgeführt. Dazu wird die Reaktionsmischung in einem Drehrohr oder in einem zirkulierenden Wirbelschichtreaktor auf die notwendige Temperatur gebracht und entsprechend zum Produkt Lithiumoxid umgesetzt. Unter homogenisierenden Bedingungen es möglich, die Reaktionsgeschwindigkeit weiter zu erhöhen.

Es ist auch möglich, die Mischung aus Kohlenstoff und Lithiumcarbonat in einem außengekühlten Reaktionsraum durch induktive Heizung zu verflüssigen und somit die beiden Reaktanden zur Reaktion zu bringen. Durch die Außenkühlung bildet sich eine Schicht aus gefrorener Schmelze, so dass die geschmolzene Reaktionsmischung, die kontinuierlich durch das Reaktionsgefäß gepumpt oder gedrückt wird, nicht mit dem Behältermaterial (beispielsweise Kupfer) in Berührung kommt. Diese Arbeitsweise ist unter dem Begriff "Skull-Technik" bekannt.

Die erfindungsgemäße, Lithiumoxid enthaltende Reaktionsmischung kann beispielsweise zur Herstellung von reiner Lithiumhydroxidlösung durch Auflösen des Reaktionsproduktes in Wasser verwendet werden. Dabei ist die Wassermenge so zu wählen, dass das Reaktionsprodukt Lithiumhydroxid (LiOH) eine Konzentration von mindestens 8 Gew.% aufweist. Bevorzugt beträgt die LiOH Konzentration mindestens 9 Gew.%. Der eventuell überschüssige Kohlenstoff ist in Wasser unlöslich, so dass er leicht durch Filtration oder Zentrifugation entfernt werden kann. Es wurde überraschend beobachtet, dass auch weitere Verunreinigungen wie das über die Kohlenstoffquelle eingeschleppte Silicium oder der Schwefel, in wasserunlösliche Produkte überführt werden, so dass diese ebenfalls durch ein einfaches fest/flüssig-Trennverfahren abgeschieden werden können. Auf diese Art und Weise läßt sich eine reine Lithiumhydroxidlösung, aus der reines, festes Lithiumhydroxid oder Lithiumhydroxid-Monohydrat nach bekanntem Verfahren hergestellt werden kann, gewinnen. Die Reinheit der nach dem erfindungsgemäßen Verfahren hergestellten 10%igen Lösung von LiOH beträgt bevorzugt mindestens 99,8%. Die Konzentrationen der hauptsächlich über die Kohlenstoffquelle eingebrachten Verunreinigungen Silicium und Schwefel liegen bevorzugt bei maximal 0,05 bzw. 0,1 Gew.%, bezogen auf enthaltenes LiOH. Die Verunreinigungen können bei der anschliessenden Kristallisation von LiOH × H₂O weiter abgereichert werden. Das erfindungsgemäß hergestellte Lithiumoxid kann für die Herstellung von Kathodenmaterialien (positiven Elektrodenmassen) für Lithiumbatterien sowie für die Herstellung von Gläsern, Glaskeramiken oder kristallinen Keramiken verwendet werden. Ganz besonders bevorzugt ist die Verwendung für lithiumleitfähige Gläser, Glaskeramiken oder Keramiken. Solche Materialien, beispielsweise LLZO (Lithiumlanthanzirkonoxid mit Granatstruktur), weisen eine Lithiumleitfähigkeit von mindestens 10⁻⁵ S/cm bei Raumtemperatur (RT) auf.

### Beispiel 1: Herstellung von Lithiumoxid durch carbothermische Zersetzung von Lithiumcarbonat im Glaskohlenstofftiegel

8,6 g Li₂CO₃ (116 mmol) wurden mit 1,4 g C (Ruß N220, 116 mmol C) in eine Isogewindeflasche gefüllt, auf dem Rollbock vermischt und in einen Tiegel aus Glaskohlenstoff gefüllt, wobei die Schütthöhe: 0,75 cm betrug.

Der Tiegel wurde im Rohr aus Quarzglas kontinuierlich mit 50 l N₂/h überspült und im Rohrofen auf 900°C aufgeheizt. Nach 4 h wurde abgekühlt.

Es wurde als Produkt: 3,4 g (100 % d. Th.) schwach graues Pulver erhalten.

Die Gesamtbase (acidimetrische Titration) ergab: 66,1 mmol OH⁻/g, entspr. 98,8 % Li₂O.

Als Verunreinigungen wurden mittels ICP (Inductively coupled plasma) bestimmt:
0,50 Gew% Si; 0,35 Gew.% S; 0,03 Gew.% Na; 0,03 Gew.% Ca; 0,005 Gew.% Al
Total Organic Carbon (TOC): 0,1 Gew.% C und
XRD: nur Reflexe für Li₂O.
Partikelgrößenverteilung (Messung mit Mastersizer 3000 von Malvern Instruments):
   D₁₀ = 30 µm
   D₅₀ = 69 µm
   D₉₀ = 163 µm

Es wurde keine meßbare Massenänderung des Tiegels beobachtet, die Gewichtsdifferenz betrug < 0,01 g. Derselbe Tiegel wurde für weitere 10 Versuche verwendet, ohne dass eine Gefügezerstörung oder Gewichtsänderung beobachtet worden ist.

### Beispiel 2: Herstellung einer reinen wäßrigen Lithiumhydroxidlösung aus Lithiumoxid

2,1 g des Produktes aus Beispiel 1 wurden in 31,0 g Wasser gelöst und von unlöslichem Rückstand abfiltriert. Das klare, farblose Filtrat wurde analysiert:
Gesamtbase (acidimetrische Titration): 4,25 mmol/g entspr. 10,2 Gew.% LiOH (97% d. Th.) Carbonattitration: 0,15 Gew.% Li₂CO₃
Folgende Verunreinigungen wurden per ICP-Analytik der Lösung gefunden:
8 ppm Fe; Na, K < 10 ppm ; 60 ppm S; 14 ppm Si

Die Reinheit des gebildeten Lithiumhydroxids beträgt etwa 99,9 % (bezogen auf enthaltenen LiOH-Feststoff).

Hochgerechnet auf eingesetztes Lithiumoxid wurden die Hauptverunreinigungen damit wie folgt abgereichert:
Si: 96 %
S: 73 %

### Vergleichsbeispiel 1: Herstellung von Lithiumoxid durch carbothermische Zersetzung von Lithiumcarbonat im Alox-Tiegel

Wie in Beispiel 1 wurde eine Mischung aus 8,6 g Lithiumcarbonatpulver und 1,6 g Ruß, Typ N220 in einem aus Al₂O₃ bestehenden Tiegel bei 900°C zu Lithiumoxid umgesetzt.

Das Reaktionsprodukt enthielt 0,34 Gew.% Al. Im Vergleich dazu enthielt das im Glaskohlenstofftiegel hergestellte Produkt lediglich 0,005 Gew.% Al. 0,05 Gew.% der Tiegelmasse wurden durch Korrosion abgetragen. In Folgeversuchen wurden ähnliche Abtragsraten beobachtet. Es erfolgt also keine Passivierung der Oberfläche.

### Vergleichsbeispiel 2: Herstellung von Lithiumoxid durch carbothermische Zersetzung von Lithiumcarbonat im Ti-ausgekleideten Tiegel

Am Boden des Glaskohlenstofftiegels wurde eine Titanfolie eingelegt und ein homogenisiertes Reaktionsgemisch bestehend aus 8,6 g Lithiumcarbonatpulver und 1,6 g Ruß, Typ N220, aufgegeben. Das Reaktionsgemisch wurde unter denselben Bedingungen wie in Beispiel 1 beschrieben zu Lithiumoxid umgesetzt.

Die Folie wurde im Laufe der Reaktion weiß und brüchig. Sie zerfiel bereits bei leichter mechanischer Beanspruchung und ließ sich nicht vollständig vom gebildeten Li₂O abtrennen.

## Patentansprüche

1. Verfahren zur Herstellung von pulverförmigem Lithiumoxid aus Lithiumkarbonat und elementarem Kohlenstoff oder einer unter den Reaktionsbedingungen elementaren Kohlenstoff bildenden Kohlenstoffquelle im Temperaturbereich von 720 bis 1200°C, **dadurch gekennzeichnet, dass** die Umsetzung unter weitgehendem Ausschluß von Sauerstoff stattfindet und wobei die Umsetzung in Behältnissen vorgenommen wird, deren produktberührende Oberflächen gegenüber den Reaktanden und Produkten korrosionsstabil sind.

2. Verfahren nach Anspruch 1, **dadurch gekennzeichnet, dass** der elementare Kohlenstoff im stöchiometrischen Verhältnis des Lithiumkarbonats zum Kohlenstoff von 1 : 0,5 bis 1 : 1,5 umgesetzt wird.

3. Verfahren nach einem der Ansprüche 1 bis 2, **dadurch gekennzeichnet, dass** der elementare Kohlenstoff in Form von Ruß oder Aktivkohle mit einem Schwefelgehalt bis 1 Gewichtsprozent und einem Siliziumgehalt bis 2 Gewichtsprozent eingesetzt wird.

4. Verfahren nach einem der Ansprüche 1 bis 3, **dadurch gekennzeichnet, dass** als Quelle für elementaren Kohlenstoff organische Materialien oder organische Materialmischungen ausgewählt aus der Gruppe bestehend aus Zucker, Methan, Stärke, Cellulose, Paraffinwachs oder Erdöl eingesetzt werden.

5. Verfahren nach einem der Ansprüche 1 bis 4, **dadurch gekennzeichnet, dass** die Umsetzung in Reaktionsgefäßen vorgenommen wird, deren produktberührte Oberflächen aus Glaskohlenstoff, Lithiumaluminat oder mit Kohlenstoff beschichteter Keramik oder ebenfalls C-beschichtetem Quarz, bestehen.

6. Verfahren nach Anspruch 5, **dadurch gekennzeichnet, dass** die Umsetzung in Reaktionsgefäßen vorgenommen wird, deren produktberührten Reaktionsgefäßwandungen aus einer erstarrten Salzschmelze bestehen.

7. Verfahren nach einem der Ansprüche 1 bis 6, **dadurch gekennzeichnet, dass** die Reaktionstemperatur im Bereich zwischen 800 und 950 °C liegt.

8. Verfahren nach einem der Ansprüche 1 bis 7, **dadurch gekennzeichnet, dass** die Umsetzung im Druckbereich von 0,01 bis 2 bar vorgenommen wird.

9. Verfahren nach einem der Ansprüche 1 bis 8, **dadurch gekennzeichnet, dass** die Umsetzung in einem Bewegtbett- oder Wanderbett-Reaktor durchgeführt wird.

10. Verfahren nach Anspruch 9, **dadurch gekennzeichnet, dass** die Umsetzung in einem Drehrohr- oder in einem zirkulierenden Wirbelschichtreaktor vorgenommen wird.

## Claims

1. A method for the production of powdered lithium oxide from lithium carbonate and elemental carbon or a carbon source forming elemental carbon under the reaction conditions in the temperature range of 720 to 1200°C, **characterized in that** the reaction takes place under substantial exclusion of oxygen and the reaction is carried out in containers whose product-contacting surfaces are corrosion resistant to the reactants and products.

2. The method according to claim 1, **characterized in that** the elemental carbon is reacted in the stoichiometric ratio of the lithium carbonate to the carbon of 1 : 0.5 to 1 : 1.5.

3. The method according to any one of claims 1 to 2, **characterized in that** the elemental carbon is used in the form of carbon black or activated carbon having a sulfur content of up to 1 weight percent and a silicon content up to 2 weight percent.

4. The method according to any one of claims 1 to 3, **characterized in that** organic materials or organic material mixtures selected from the group consisting of sugar, methane, starch, cellulose, paraffin wax or petroleum are used as a source of elemental carbon.

5. The method according to any one of claims 1 to 4, **characterized in that** the reaction is carried out in reaction vessels whose product-contacted surfaces are consisting of glassy carbon, lithium aluminate or carbon-coated ceramic or C-coated quartz.

6. The method according to claim 5, **characterized in that** the reaction is carried out in reaction vessels whose product-contacted reaction vessel walls consist of a solidified molten salt.

7. The method according to any one of claims 1 to 6, **characterized in that** the reaction temperature is in the range between 800 and 950°C.

8. The method according to any one of claims 1 to 7, **characterized in that** the reaction is carried out in the pressure range of 0.01 to 2 bar.

9. The method according to any one of claims 1 to 8, **characterized in that** the reaction is carried out in a moving bed reactor.

10. The method according to claim 9, **characterized in that** the reaction is carried out in a rotary reactor or in a circulating fluidized bed reactor.

## Revendications

1. Procédé destiné à la préparation d'oxyde de lithium pulvérulent à partir de carbonate de lithium et de carbone élémentaire ou d'une source de carbone engendrant dans les conditions réactionnelles du carbone élémentaire, dans la plage de température de 720 à 1 200 °C, **caractérisé en ce que** la réaction a lieu essentiellement à l'abri de l'oxygène et la réaction étant effectuée dans des récipients dont les surfaces en contact avec les produits sont résistantes à la corrosion vis-à-vis des partenaires réactionnels et des produits.

2. Procédé selon la revendication 1, **caractérisé en ce qu'**on fait réagir le carbone élémentaire en un rapport stoechiométrique du carbonate de lithium au carbone de 1 : 0,5 à 1 : 1,5.

3. Procédé selon l'une quelconque des revendications 1 et 2, **caractérisé en ce que** le carbone élémentaire est utilisé sous forme de noir de carbone ou de charbon actif ayant une teneur en soufre de jusqu'à 1 pour cent en poids et une teneur en silicium de jusqu'à 2 pour cent en poids.

4. Procédé selon l'une quelconque des revendications 1 à 3, **caractérisé en ce que** comme source de carbone élémentaire on utilise des matières organiques ou des mélanges de matières organiques, choisi(e)s dans l'ensemble constitué par un sucre, le méthane, l'amidon, la cellulose, la cire de paraffine ou le pétrole.

5. Procédé selon l'une quelconque des revendications 1 à 4, **caractérisé en ce que** la réaction est effectuée dans des récipients de réaction dont les surfaces en contact avec les produits sont constituées de carbone vitreux, d'aluminate de lithium ou de céramique revêtue de carbone ou de quartz également revêtu de carbone.

6. Procédé selon la revendication 5, **caractérisé en ce que** la réaction est effectuée dans des récipients de réaction dont les parois en contact avec les produits du récipient de réaction sont constituées d'un sel fondu solidifié.

7. Procédé selon l'une quelconque des revendications 1 à 6, **caractérisé en ce que** la température de réaction se situe dans la plage comprise entre 800 et 950 °C.

8. Procédé selon l'une quelconque des revendications 1 à 7, **caractérisé en ce que** la réaction est effectuée dans la plage de pression de 0,01 à 2 bars.

9. Procédé selon l'une quelconque des revendications 1 à 8, **caractérisé en ce que** la réaction est effectuée dans un réacteur à lit en mouvement ou lit mobile.

10. Procédé selon la revendication 9, **caractérisé en ce que** la réaction est effectuée dans un réacteur tubulaire rotatif ou dans un réacteur à couche tourbillonnaire circulante.
